# EUROPEAN PATENT SPECIFICATION

(11) **EP 4 180 242 B1**
(45) Date of publication and mention of the grant of the patent: **29.01.2025**
(21) Application number: 22186993.6
(22) Date of filing: 26.07.2022
(51) Int. Cl.: B60C 9/22

(54) **PNEUMATIC TIRE**
LUFTREIFEN
PNEUMATIQUE

(30) Priority: 15.11.2021 JP 2021185908
(43) Date of publication of application: 17.05.2023
(73) Proprietor: Sumitomo Rubber Industries, Ltd., Kobe-shi, Hyogo-ken 651-0072 (JP)
(72) Inventor: INOUE, Manabu, Hyogo, 651-0072 (JP)
(74) Representative: Manitz Finsterwald Patent- und Rechtsanwaltspartnerschaft mbB

(56) References cited:
- EP-A1- 2 218 588
- EP-A1- 3 530 485
- JP-A- 2007 191 830
- JP-A- 2011 168 095

## Description

### BACKGROUND OF THE INVENTION

### Field of the Invention

The present invention relates to a pneumatic tire.

### Background Art

For example, Japanese Laid-Open Patent Publication No. 2018-167716 proposes a tire, for a motorcycle, including a band layer inside a tread portion. The band layer is formed from a band ply having a steel band cord. The tire for a motorcycle is expected to have improved steering stability and durability by specifying the compressive stiffness or the bending stiffness of the band cord.

Other relevant prior art is known from EP 2 218 588 A1, JP 2011 168095 A and EP 3 530 485 A1.

A pneumatic tire having a steel cord provided in a band layer as in the above-described tire for a motorcycle has less outer diameter growth during running, and has excellent straight running stability during high speed running. On the other hand, the band layer also suppresses appropriate deformation of the tread portion near each tread end. Therefore, the tread portion of the pneumatic tire has a small ground-contact area during cornering, and there is room for improvement in cornering performance.

The present invention has been made in view of the above-described problem, and a main object of the present invention is to provide a pneumatic tire that can have improved cornering performance while maintaining straight running stability during high speed running.

### SUMMARY OF THE INVENTION

The present invention is directed to a pneumatic tire according to claim 1.

By having the above-described configuration, the pneumatic tire of the present invention can have improved cornering performance while maintaining straight running stability during high speed running.

### BRIEF DESCRIPTION OF THE DRAWINGS

FIG. 1 is a transverse cross-sectional view of a pneumatic tire of an embodiment of the present invention;
FIG. 2 is an enlarged perspective view of a band cord in FIG. 1;
FIG. 3 is an enlarged cross-sectional view of the band cord;
FIG. 4 is a schematic diagram when measuring a bending stiffness;
FIG. 5(A) shows a cord-included sample used for measuring a compressive stiffness;
FIG. 5(B) is a graph showing a compression load-compression amount curve of the band cord; and
FIG. 6 is an enlarged cross-sectional view of a band cord of another embodiment.

### DETAILED DESCRIPTION

Hereinafter, an embodiment of the present invention will be described with reference to the drawings.

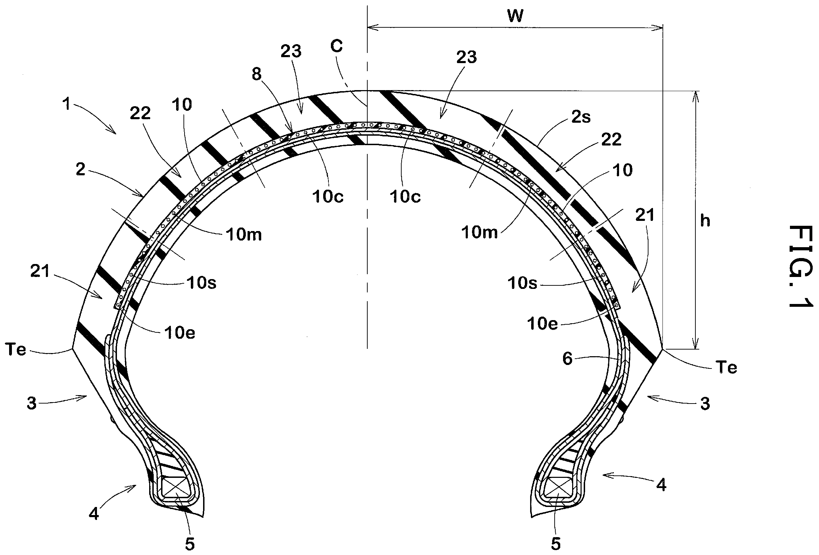

FIG. 1 shows a transverse cross-sectional view of a pneumatic tire (hereinafter, sometimes simply referred to as "tire") 1 showing an embodiment of the present invention, in a normal state. The tire 1 of the present embodiment is for a motorcycle, and is suitably used as a front wheel tire for circuit running. However, the present invention is not limited to such a mode, and is suitable for use for a tire for a passenger car, a tire for a light truck, a tire for a truck or a bus, etc.

In the case of a tire for which various standards are defined, the "normal state" is a state where the tire is fitted on a normal rim and inflated to a normal internal pressure and no load is applied to the tire. In the case of a tire for which various standards are not defined, the normal state means a standard use state, corresponding to the purpose of use of the tire, where the tire is not mounted on a vehicle and no load is applied to the tire. In the present specification, unless otherwise specified, dimensions and the like of components of the tire are values measured in the normal state. Moreover, when measuring the physical properties of an inner member included in a tire as a product on the basis of the present specification, the inner member is taken in a manner that does not impair the characteristics thereof as much as possible, and then the physical properties are measured.

The "normal rim" is a rim that is defined, in a standard system including a standard on which the tire is based, by the standard for each tire, and is, for example, the "standard rim" in the JATMA standard, the "Design Rim" in the TRA standard, or the "Measuring Rim" in the ETRTO standard.

The "normal internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

As shown in FIG. 1, in a ground-contact surface 2s of a tread portion 2, a center portion in the tire axial direction projects outward in the tire radial direction with respect to each tread end Te. In the present embodiment, the ground-contact surface 2s is curved in an arc shape so as to be convex outward in the tire radial direction. The tread ends Te correspond to both ends in the tire axial direction of the ground-contact surface 2s of the tread portion 2, and can be brought into contact with the ground at a maximum camber angle during cornering.

The tire 1 of the present embodiment includes, for example, a carcass 6 and a band layer 8. The carcass 6 extends from the tread portion 2 through sidewall portions 3 to bead cores 5 of bead portions 4. A known configuration is used as appropriate for the carcass 6. The band layer 8 is disposed inside the tread portion 2 and disposed outward of the carcass 6 in the tire radial direction. Although not included in the present embodiment, another tread reinforcing layer may be disposed inward of the band layer 8 in the tire radial direction.

The band layer 8 is formed as a so-called jointless band including a band cord 10 helically wound in the tire circumferential direction. In a preferable mode, the band cord 10 is wound at an angle of not greater than 5° with respect to the tire circumferential direction.

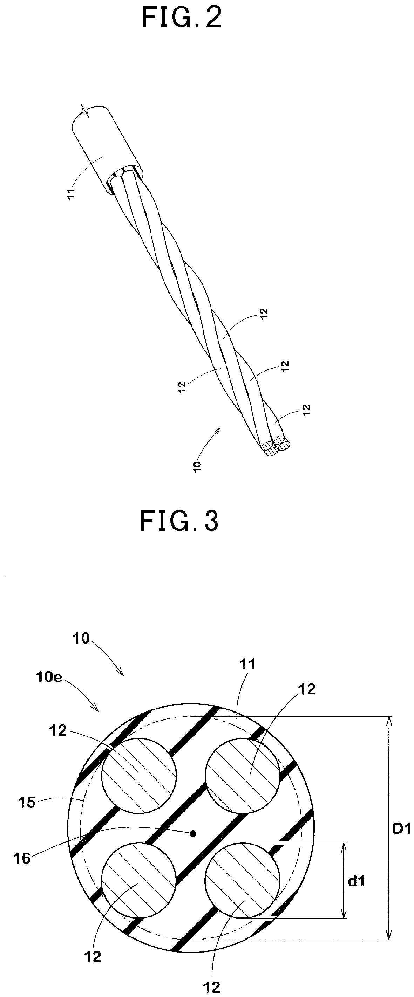

FIG. 2 show an enlarged perspective view of the band cord 10 in FIG. 1. As shown in FIG. 2, the band cord 10 is a steel cord in which a plurality of steel filaments 12 are covered with a topping rubber 11.

Conventionally, a tire having a steel cord provided in a band layer has less outer diameter growth during running, and has excellent straight running stability during high speed running. However, the band layer also suppresses appropriate deformation of a tread portion near each tread end. Therefore, the ground-contact area of the tread portion of the tire during cornering tends to be smaller, and there is room for improvement in cornering performance.

In the present invention, in order to ensure appropriate deformation of the tread portion 2 near each tread end Te, in a tire cross-sectional view including the tire rotation axis, a filament occupancy ratio Fs is specified for a band cord 10e disposed closest to the tread end Te in the band layer 8. The filament occupancy ratio Fs is defined as described below.

FIG. 3 shows a transverse cross-sectional view of the band cord 10e. As shown in FIG. 3, the filament occupancy ratio is represented by the ratio ΣSf/Sv of a total ΣSf(mm²) of the cross-sectional areas of the plurality of steel filaments 12 to an area Sv of a smallest virtual circle 15 (shown by an alternate long and two short dashes line in FIG. 3) that can completely enclose all of the plurality of steel filaments 12 arranged in one band cord 10 in a transverse cross-section of this band cord 10. A band cord 10 having a small filament occupancy ratio Fs is easily stretched, and a band cord 10 having a large filament occupancy ratio Fs is difficult to stretch. In the present invention, the filament occupancy ratio Fs of the band cord 10e disposed closest to the tread end Te is 0.15 to 0.50. Accordingly, it is easier for the band cord 10e to appropriately stretch. Therefore, a large ground-contact surface can be ensured near each tread end Te, and cornering performance can be improved.

On the other hand, if the total ΣSf of the cross-sectional areas of the steel filaments 12 in the band cord 10 decreases, the holding force of the tread portion by the band cord 10 decreases, so that the tread portion easily becomes deformed by the centrifugal force acting on the tread portion during high speed running, causing a concern that straight running stability may decrease. Therefore, the developers have found that, as the total ΣSf of the cross-sectional areas of the steel filaments 12 decreases, in order to improve the holding force acting on the tread portion, it is preferable to increase an average number Ea of the band cords 10 arranged in the tire width direction. On the basis of such finding, in the present invention, the product of the average number Ea of the band cords 10 arranged per 5 cm in the tire width direction (cords/5 cm) and the total ΣSf of the cross-sectional areas of the steel filaments 12 (hereinafter, sometimes referred to as "product Ea*ΣSf") is not less than 5. Accordingly, sufficient stretch is ensured by the band cord, and a sufficient holding force is also obtained while cornering performance during high speed running is improved, so that it is considered that it is also possible to improve straight running performance.

The above-described band cord 10 can be obtained, for example, by twisting together corrugated steel filaments 12. In addition, the filament occupancy ratio Fs can be adjusted as appropriate by changing the degree of corrugation of the steel filaments 12.

Hereinafter, more detailed configurations of the present embodiment will be described. The configurations described below show a specific mode of the present embodiment. Therefore, it is needless to say that the present invention can achieve the above-described effect even when the configurations described below are not provided. In addition, even when any one of the configurations described below is independently applied to the tire according to the present invention having the above-described characteristics, performance improvement corresponding to each configuration can be expected. Furthermore, when some of the configurations described below are applied in combination, complex performance improvement corresponding to each configuration can be expected.

As shown in FIG. 1, the tire 1 of the present embodiment is for a motorcycle, and a tread aspect ratio Ta represented by the ratio h/W of a ground-contact height h, which is the height in the tire radial direction from the tread end Te to the center portion of the ground-contact surface 2s, to a ground-contact half width W, which is the distance in the tire axial direction from a tire equator plane C to the tread end Te, is, for example, about 0.6 to 1.0. The developers have found that in order to further enhance the above-described effect, it is effective to specify the tread aspect ratio Ta and the filament occupancy ratio Fs in relation to each other.

From such a viewpoint, the product Ta*Fs of the tread aspect ratio Ta and the filament occupancy ratio Fs is preferably not greater than 0.40, more preferably not greater than 0.38, and further preferably not greater than 0.35. As the tread aspect ratio Ta increases, the deformation near each tread end Te becomes larger, so that it is considered that it is preferable to make the filament occupancy ratio Fs of the band cord 10e smaller. Therefore, by setting the product Ta*Fs of the tread aspect ratio Ta and the filament occupancy ratio Fs of the band cord 10e to be not greater than a certain value, sufficient stretch of the band cord 10e can be ensured according to the tread aspect ratio Ta, and cornering performance can be reliably improved. On the other hand, the lower limit of the product Ta*Fs is not particularly limited, but the product Ta*Fs is preferably not less than 0.15, more preferably not less than 0.20, and further preferably not less than 0.22. Accordingly, the deformation of the ground-contact surface near each tread end Te is made appropriate, and cornering performance is further improved.

The present invention is not limited to the tire for a motorcycle, and may be applied, for example, to a pneumatic tire for a passenger car. The tread aspect ratio Ta of such a tire is, for example, not greater than 0.30. In this case, the product Ta*Fs is preferably 0.05 to 0.15.

Moreover, as shown in FIG. 1, in the tire 1 of the present embodiment, the band cord 10 is arranged in the tire width direction to form the band layer 8. The number of the band cords 10 arranged per 5 cm in the tire width direction is preferably not less than 40 (cords/5 cm) and more preferably not less than 41. On the other hand, as for the upper limit of this number, this number is preferably not greater than 80 (cords/5 cm) and more preferably not greater than 60 (cords/5 cm). Accordingly, the holding force acting on the tread portion is made appropriate, and straight running stability and cornering performance are further improved.

The product of the average number Ea of the band cords 10 arranged and the total ΣSf of the areas of the filaments 12 is preferably not less than 5.5 and more preferably not less than 5.9. On the other hand, as for the upper limit of the product, the product is preferably not greater than 15.0, more preferably not greater than 9, and further preferably not greater than 8. Accordingly, appropriate stretch of the band cord 10 occurs while the holding force acting on the tread portion is maintained, so that straight running stability and cornering performance are even further improved.

Moreover, the difference (Ec-Ee) between a number Ec of the band cords 10 arranged per 5 cm in the tire width direction in the center portion (hereinafter, sometimes referred to as "tread center region") of the ground-contact surface and a number Ee of the band cords 10 arranged in the width direction in a region on the tread end Te side (hereinafter, sometimes referred to as "tread end side region") is preferably not greater than 10 and more preferably not greater than 9. The lower limit of the difference (Ec-Ee) is not particularly limited, but the difference (Ec-Ee) is preferably not less than 0. Accordingly, the holding force in the tread center region and the tread end side region can be made uniform, and it is easier to improve straight running stability.

Ea, Ec, and Ee, each of which represents the number of the band cords 10 arranged in the tire width direction, are each the number of the band cords 10 arranged in the tire width direction along the arrangement direction of the band cord 10, and refers to the number of the band cords 10 arranged in a direction along the arc of the band layer 8 in the case of the tire for a motorcycle shown in FIG. 1.

The average number Ea of the band cords 10 arranged is the average number of the band cords 10 arranged per 5 cm over the entirety of the band layer 8, and is calculated from the length along the arc of the band layer 8 and the number of the band cords 10 included therein. The number Ec of the band cords 10 arranged in the tread center region is the number of the band cords 10 arranged in a range of ±2.5 cm centered on the tire equator plane. In addition, the number Ee of the band cords 10 arranged in the tread end side region is the number of the band cords 10 in a range of 5 cm from the end point on the tread end portion side of the band layer 8 toward the center portion thereof. The number Ee of the band cords 10 arranged in the tread end side region is the average of the numbers of the band cords 10 arranged per 5 cm at end portions on both sides. These numbers can be calculated by obtaining the number of the band cords 10 in each region in a state where the distance between the bead portions is adjusted to a normal rim width in a cross-section in the tire radial direction including the tire rotation axis.

Moreover, the average thickness in the tire radial direction of the band layer 8 is preferably not less than 0.5 mm and not greater than 1.5 mm. As used herein, the average thickness of the band layer refers to the average thickness from one end of the band layer 8 to the other end of the band layer 8.

As shown in FIG. 3, in the band cord 10 of the present embodiment, two to six steel filaments 12 are twisted together. In a preferable mode, in the band cord 10, three to five steel filaments 12 are twisted together. In addition, the respective steel filaments 12 are arranged so as to surround a center 16 of the band cord 10, and in a preferable mode, the respective steel filaments 12 are arranged at an equal interval in the outer circumferential direction of the band cord 10 and are tangent to the smallest virtual circle 15. However, the arrangement of the steel filament 12 is not limited to such a mode.

An outer diameter D1 of the smallest virtual circle 15 is, for example, 0.50 to 1.50 mm, preferably 0.55 to 1.00 mm, and more preferably 0.60 to 0.80 mm in the tread end side region. On the other hand, in the tread center region, the outer diameter D1 is, for example, 0.50 to 1.00 mm, preferably 0.55 to 0.90 mm, and more preferably 0.60 to 0.80 mm. Accordingly, while the holding force at the tread portion is increased, the band cord 10 can be easily stretched during cornering, whereby the ground-contact shape can be made appropriate, and it can be easier to improve straight running stability and cornering performance.

The area Sv of the smallest virtual circle 15 can be obtained by obtaining the above-described outer diameter D1. In the tread center region, the outer diameter D1 can be calculated from the smallest virtual circle of the band cord 10 closest to the equator plane in the band layer 8, and in the tread end side region, the outer diameter D1 can be calculated from the smallest virtual circle of the band cord 10 at the end point of the band layer 8. The outer diameter D1 and the area Sv of the smallest virtual circle in the tread end side region are each an average of the values at both end portions.

An outer diameter d1 of the steel filament 12 is, for example, 0.15 to 0.27 mm and preferably 0.18 to 0.24 mm. However, the outer diameter d1 is not limited to such a range.

If the filament occupancy ratio Fs in the band cord 10e is excessively small, the stiffness reduction effect near each tread end Te spreads to the center portion of the tread portion 2, the center portion of the tread portion 2 also easily becomes deformed, and a decrease in straight running stability during high speed running may be caused. Therefore, the filament occupancy ratio Fs in the band cord 10e is preferably not less than 0.20 and more preferably not less than 0.25, and is preferably not greater than 0.40 and more preferably not greater than 0.35. Accordingly, cornering performance and straight running stability during high speed running are improved in a well-balanced manner.

Moreover, the band cord 10e for which the filament occupancy ratio Fs is specified in the above-described range has appropriate elasticity, and thus exhibits the above-described effect and is less likely to meander during tread rubber shrinkage after tire vulcanization molding. Therefore, fine wavy deformation of the tread portion 2 caused by meandering of the band cord 10e around each tread end Te (hereinafter, such a defect is sometimes referred to as "tread waviness") is suppressed, so that the molding defect rate during tire production is reduced.

From the same viewpoint, the absolute value of the difference between the tread aspect ratio Ta and the filament occupancy ratio Fs of the band cord 10 is preferably not greater than 1.0, more preferably 0.1 to 0.9, and further preferably 0.2 to 0.8.

The bending stiffness of the band cord 10 is, for example, not greater than 35.0 g·cm and preferably 5.0 to 15.0 g·cm. Accordingly, tread waviness can be suppressed while a tire stiffness feeling during cornering is maintained.

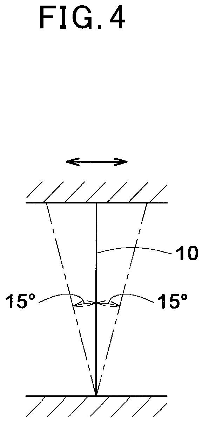

The bending stiffness is measured as follows. FIG. 4 shows a schematic diagram when measuring the bending stiffness. As shown in FIG. 4, the bending stiffness is measured, for example, by using a stiffness tester (for example, 150-D type) manufactured by TABER INDUSTRIES (USA). The bending stiffness corresponds to the average of a bending moment at +15 degrees and a bending moment at -15 degrees when both ends of a band cord 10 having a length of 145 mm are attached to clamps and bending angles of +15 degrees and -15 degrees are given to the band cord 10.

A compressive stiffness CS of the band cord 10 is, for example, not greater than 500 N/mm, preferably 200 to 500 N/mm, and more preferably 300 to 400 N/mm. Accordingly, the compression fatigue resistance of the band cord 10 is improved.

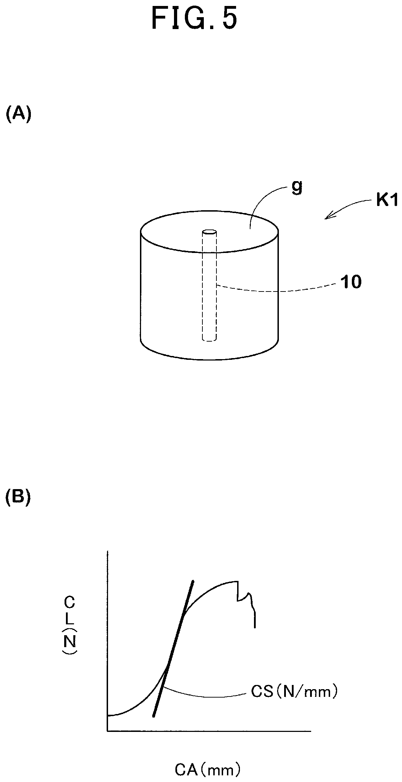

The compressive stiffness CS is measured as follows. As shown in FIG. 5(A), a cord-included sample K1 in which one band cord 10 having a length of 25 mm is embedded at the center of a cylindrical rubber g having a diameter of 25 mm and a height of 25 mm in the height direction, and a correction cord-free sample K2 (not shown) having no band cord 10 embedded therein are prepared. Each sample K1, K2 is vulcanized under the same vulcanization conditions (for example, temperature: 165°C, 18 minutes), and has substantially the same physical properties except for the presence or absence of the band cord 10.

Moreover, for each sample K1, K2, a compression load-compression amount curve which is a graph showing the relationship between a compression load CL and a compression amount CA is obtained. The compression load-compression amount curve is obtained by compressing each sample K1, K2 at a speed of 2.0 mm/min using a tensile tester, and measuring the compression load CL and the compression amount CA. Then, the measurement data of the cord-included sample K1 is corrected with the measurement data of the cord-free sample K2 (that is, the effect of the rubber part of the sample is removed, and data that can be simulated as the cord only is extracted), thereby obtaining a compression load-compression amount curve of the band cord 10 as shown in FIG. 5(B). The gradient in a middle region of this curve is defined as the compressive stiffness CS (N/mm).

As shown in FIG. 1, in the tire cross-sectional view, the band layer 8 includes a plurality of the band cords 10 arranged in the tire axial direction. As for these band cords 10, the filament occupancy ratio Fs of the band cord 10 closer to the tread end Te is smaller. Accordingly, cornering performance and straight running stability during high speed running are improved in a well-balanced manner.

More specifically, in the tire cross-sectional view, when the ground-contact surface of the tread portion 2 from the tire equator plane C to the tread end Te is divided into three equal regions, the region on the tread end Te side is referred to as a shoulder region 21, the region on the tire equator plane C side is referred to as a crown region 23, and the region between the shoulder region 21 and the crown region 23 is referred to as a middle region 22, the filament occupancy ratio Fs is preferably specified for each of the band cords 10 included in the respective regions.

In the present embodiment, at least band cords 10s included in the shoulder region 21 have substantially the same characteristics as the above-described band cord 10e. That is, the configuration of the above-described band cord 10e can all be applied to the band cords 10s disposed in the shoulder region 21. Accordingly, cornering performance is reliably improved.

An average Am of the filament occupancy ratios Fs of band cords 10m included in the middle region 22 is preferably larger than an average As of the filament occupancy ratios Fs of the band cords 10s included in the shoulder region 21. Specifically, the average Am is preferably 1.30 to 1.50 times the average As. In addition, an average Ac of the filament occupancy ratios Fs of band cords 10c included in the crown region 23 is preferably larger than the average As and the average Am. Specifically, the average Ac is preferably 1.70 to 1.90 times the average As. Accordingly, cornering performance and straight running stability at high speed are improved in a well-balanced manner. The boundary between the shoulder region 21 and the middle region 22 and the boundary between the middle region 22 and the crown region 23 extend in a tire normal direction orthogonal to the ground-contact surface 2s, in the tire cross-sectional view.

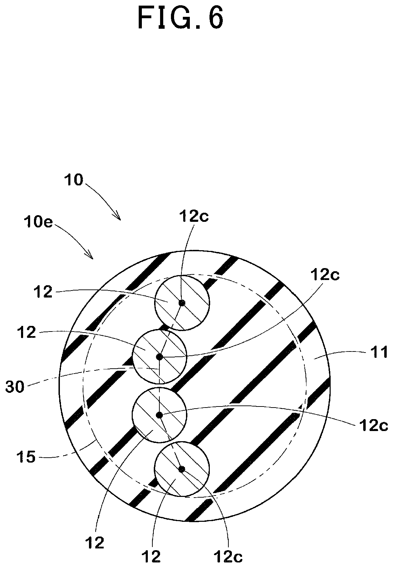

FIG. 6 shows an enlarged cross-sectional view of a band cord 10e of another embodiment. As shown in FIG. 6, the band cord 10e may be, for example, a band cord in which steel filaments 12 are arranged in a row in one direction inside a smallest virtual circle 15. In this embodiment, the steel filaments 12 are arranged such that a virtual line 30 connecting centers 12c of the adjacent steel filaments 12 extends in the one direction so as to have a convex shape. Such a band cord 10 has a small filament occupancy ratio Fs, and a larger ground-contact surface can be ensured near each tread end Te. The embodiment shown in FIG. 6 may be applied to the band cord 10 disposed at another position.

As shown in FIG. 1, the band layer 8 of the tire 1 of the present embodiment of the present invention is preferably formed by covering the band cord 10 with a band cord coating layer. Examples of the band cord coating layer include a thermoplastic elastomer composition using a thermoplastic elastomer as well as a rubber composition using a diene-based rubber.

In the case where the band cord coating layer is a rubber composition, as a rubber component, one known in the tire field can be used. Examples of the rubber component include isoprene-based rubbers, and diene-based rubbers such as butadiene rubber (BR), styrene-butadiene rubber (SBR), acrylonitrile butadiene rubber (NBR), chloroprene rubber (CR), isobutylene-isoprene-rubber (IIR), and styrene-isoprene-butadiene copolymer rubber (SIBR). One of these rubbers may be used alone, or two or more of these rubbers may be used in combination. Among them, from the viewpoint of obtaining good adhesion to the band cord 10, an isoprene-based rubber is preferably used.

Examples of the isoprene-based rubber include natural rubber (NR), isoprene rubber (IR), reformed NR, modified NR, and modified IR. As the NR, for example, NRs that are generally used in the tire industry, such as SIR20, RSS#3, and TSR20, can be used. The IR is not particularly limited, and, as the IR, for example, IRs that are generally used in the tire industry, such as IR2200, can be used. Examples of the reformed NR include deproteinized natural rubber (DPNR) and ultra-pure natural rubber (UPNR), examples of the modified NR include epoxidized natural rubber (ENR), hydrogenated natural rubber (HNR), and grafted natural rubber, and examples of the modified IR include epoxidized isoprene rubber, hydrogenated isoprene rubber, and grafted isoprene rubber. These rubbers may be used individually, or two or more of these rubbers may be used in combination. Among them, NR is preferable.

The amount of the isoprene-based rubber in 100% by mass of the rubber component is preferably not less than 65% by mass, more preferably not less than 80% by mass, and further preferably 100% by mass.

Moreover, the rubber composition preferably contains a filler. Examples of the filler include carbon black, silica, clay, alumina, talc, calcium carbonate, magnesium carbonate, aluminum hydroxide, magnesium hydroxide, magnesium oxide, and titanium oxide. These fillers may be used individually, or two or more of these fillers may be used in combination. In addition, as these fillers, fillers made from biomass materials as well as fillers derived from petroleum and minerals may be used.

The filler is preferably contained in a range of not less than 40 parts by mass and not greater than 150 parts by mass per 100 parts by mass of the rubber component. By setting the amount of the filler to be in this range, sufficient strength is exhibited, so that it is considered that it is possible to improve straight running stability and cornering performance.

Moreover, the rubber composition may contain a plasticizer. The amount of the plasticizer per 100 parts by mass of the rubber component is preferably not less than 3 parts by mass and not greater than 50 parts by mass.

The plasticizer is a material that imparts plasticity to the rubber component, and examples of the plasticizer include: fats and oils (oils) such as process oils, extender oils, vegetable oils, and animal oils; resins such as liquid polymers and liquid resins; and waxes. Specifically, the plasticizer is a component that can be extracted from the rubber composition using acetone. In addition to the above-described petroleum-derived and naturally derived plasticizers, liquid low molecular hydrocarbons obtained by pyrolysis of the rubber composition, and oils obtained by refining used lubricating oils and edible oils may be used as the plasticizer.

In addition to the above-described materials, from the viewpoint of adhesion to the band cord coating layer, an organic acid metal salt is preferably contained in a range of not less than 0.1 parts by mass and not greater than 2 parts by mass per 100 parts by mass of the rubber component. Accordingly, it is possible to improve the adhesion between the band cord 10 and the band cord coating layer. Examples of the metal element of the organic acid metal salt include chromium, iron, cobalt, nickel, tin, antimony, and bismuth.

Moreover, in addition to the above-described materials, it is possible to appropriately select and use materials that are generally used for the rubber composition, such as an antioxidant, a wax, zinc oxide, a processing aid, sulfur, and a vulcanization accelerator.

Moreover, in the case where the band cord coating layer is a thermoplastic elastomer composition, the band cord coating layer is the same except that the above-described rubber component is replaced with a thermoplastic elastomer. The thermoplastic elastomer is an elastomer having hard segments and soft segments and forming a network by the van der Waals forces of the hard segments.

Examples of the thermoplastic elastomer include styrene-butadiene-styrene block copolymer (SBS), styrene-ethylene-butadiene-styrene block copolymer (SEBS), and styrene-isoprene-styrene block copolymer (SIS).

Moreover, from the viewpoint of adhesion to the coating layer, the surface of the band cord 10 in the present invention is preferably plated. As the type of the plating layer, in addition to plating of two elements using copper and zinc, it is possible to use plating of three elements using copper, zinc, and cobalt, etc.

As shown in FIG. 1, a tread rubber disposed outward of the band layer 8 may include a plurality of rubber compositions or thermoplastic elastomer compositions in the tire axial direction, or may include a plurality of rubber compositions or thermoplastic elastomer layers in the tire axial direction.

The materials used for the tread rubber are the same as for the above-described band cord coating layer. In the case of a rubber composition, isoprene-based rubber, butadiene rubber, or styrene-butadiene rubber is preferably used as a rubber component, and two or more of these rubbers may be used in combination. Among them, styrene-butadiene rubber is preferably used.

The thickness of the tread rubber is preferably not less than 5 mm and not greater than 12 mm. The thickness of the tread rubber is the thickness of the tread rubber at the center of the tread portion. In the case where the tread center portion has a groove, the thickness of the tread rubber is the thickness from the point of intersection of the tire equator plane and a straight line connecting end portions of the outermost portion of the groove to the outermost portion of the band layer 8 in a tread cross-section.

Although the tire of the embodiment of the present invention has been described in detail above, the present invention is not limited to the above specific embodiment but only by the appended claims.

### EXAMPLES

Front wheel tires for a motorcycle having a size of 120/70R17 and having the basic structure in FIG. 1 were produced as test tires on the basis of specifications in Tables 1 and 2. In addition, as Comparative Examples 1 to 4, tires in which the filament occupancy ratio Fs and/or the product Ea*ΣSf was outside the range of the present invention were produced as test tires. The tires of Comparative Examples 1 to 4 are substantially the same as the tires of Examples except for the above point. Each tire was tested for straight running stability during high speed running and cornering performance. The common specifications and the test methods for the respective tires are as follows.
Test vehicle: motorcycle having an engine displacement of 1000 cc
Rim size: MT3.50×17
Internal pressure: 290 kPa
The test methods are as follows.

### <Straight Running Stability During High Speed Running>

The above test vehicle was caused to run on a circuit, and sensory evaluation was made by a driver for straight running stability during high speed running. The results are indicated as scores with the result of Comparative Example 1 being regarded as 100. A higher value indicates that the straight running stability is better.

### <Cornering Performance>

The above test vehicle was caused to run on a circuit, and sensory evaluation was made by a driver for cornering performance during cornering in which a tread end was brought into contact with the ground. The results are indicated as scores with the result of Comparative Example 1 being regarded as 100. A higher value indicates that the cornering performance is better.

The test results are shown in Tables 1 and 2.

**[Table 1]**

| | Com. Ex. 1 | Com. Ex. 2 | Com. Ex. 3 | Com. Ex. 4 | Ex. 1 | Ex. 2 | Ex. 3 | Ex. 4 | Ex. 5 |
|---|---|---|---|---|---|---|---|---|---|
| Filament occupancy ratio Fs | 0.51 | 0.14 | 0.51 | 0.14 | 0.31 | 0.26 | 0.49 | 0.49 | 0.40 |
| Average number Ea of band cords arranged | 21 | 21 | 42 | 42 | 42 | 42 | 37 | 42 | 42 |
| Total ΣSf of cross-sectional areas of steel filaments (mm²) | 0.23 | 0.23 | 0.23 | 0.23 | 0.14 | 0.23 | 0.23 | 0.23 | 0.23 |
| Product Ea*ΣSf | 4.83 | 4.83 | 9.66 | 9.66 | 5.88 | 9.66 | 8.51 | 9.66 | 9.66 |
| Tread aspect ratio Ta | 0.90 | 0.90 | 0.90 | 0.90 | 0.90 | 0.90 | 0.90 | 0.90 | 0.90 |
| Product Ta*Fs | 0.46 | 0.13 | 0.46 | 0.13 | 0.28 | 0.23 | 0.44 | 0.44 | 0.36 |
| Straight running stability during high speed running (scores) | 100 | 97 | 112 | 114 | 141 | 134 | 125 | 128 | 129 |
| Cornering performance (scores) | 100 | 93 | 108 | 109 | 124 | 121 | 115 | 118 | 129 |

**[Table 2]**

| | Ex. 6 | Ex. 7 | Ex. 8 | Ex. 9 | Ex. 10 | Ex. 11 | Ex. 12 | Ex. 13 | Ex. 14 |
|---|---|---|---|---|---|---|---|---|---|
| Filament occupancy ratio Fs | 0.26 | 0.20 | 0.30 | 0.50 | 0.45 | 0.35 | 0.25 | 0.20 | 0.15 |
| Average number Ea of band cords arranged | 42 | 42 | 42 | 37 | 37 | 37 | 37 | 37 | 37 |
| Total ΣSf of cross-sectional areas of steel filaments (mm²) | 0.23 | 0.23 | 0.18 | 0.14 | 0.14 | 0.14 | 0.14 | 0.14 | 0.14 |
| Product Ea*ΣSf | 9.66 | 9.66 | 7.56 | 5.18 | 5.18 | 5.18 | 5.18 | 5.18 | 5.18 |
| Tread aspect ratio Ta | 0.90 | 0.90 | 0.90 | 0.90 | 0.90 | 0.90 | 0.90 | 0.90 | 0.90 |
| Product Ta*Fs | 0.23 | 0.18 | 0.27 | 0.45 | 0.41 | 0.32 | 0.23 | 0.18 | 0.14 |
| Straight running stability during high speed running (scores) | 134 | 134 | 138 | 121 | 123 | 125 | 124 | 122 | 120 |
| Cornering performance (scores) | 121 | 119 | 122 | 112 | 114 | 116 | 115 | 112 | 111 |

Rear wheel tires for a motorcycle having a size of 190/55R17 and having the basic structure in FIG. 1 (mount rim: MT6.00×17, internal pressure: 290 kPa) were produced as test tires on the basis of specifications in Tables 3 and 4. In addition, as Comparative Examples 5 to 8, tires in which the filament occupancy ratio Fs and/or the product Ea*ΣSf was outside the range of the present invention were produced as test tires. The tires of Comparative Examples 5 to 8 are substantially the same as the tires of Examples except for the above point. The same tests were performed for these tires. The scores of straight running stability during high speed running and cornering performance of Examples in Tables 3 and 4 shown below are based on the results of Comparative Example 5 being regarded as 100.

The test results are shown in Tables 3 and 4.

**[Table 3]**

| | Com. Ex. 5 | Com. Ex. 6 | Com. Ex. 7 | Com. Ex. 8 | Ex. 15 | Ex. 16 | Ex. 17 | Ex. 18 | Ex. 19 |
|---|---|---|---|---|---|---|---|---|---|
| Filament occupancy ratio Fs | 0.66 | 0.14 | 0.55 | 0.19 | 0.39 | 0.48 | 0.48 | 0.31 | 0.35 |
| Average number Ea of band cords arranged | 21 | 21 | 42 | 35 | 42 | 37 | 42 | 42 | 42 |
| Total ΣSf of cross-sectional areas of steel filaments (mm²) | 0.23 | 0.23 | 0.23 | 0.14 | 0.14 | 0.23 | 0.23 | 0.23 | 0.18 |
| Product Ea*ΣSf | 4.83 | 4.83 | 9.66 | 4.90 | 5.88 | 8.51 | 9.66 | 9.66 | 7.56 |
| Tread aspect ratio Ta | 0.60 | 0.60 | 0.60 | 0.60 | 0.60 | 0.60 | 0.60 | 0.60 | 0.60 |
| Product Ta*Fs | 0.40 | 0.08 | 0.33 | 0.11 | 0.23 | 0.29 | 0.29 | 0.19 | 0.21 |
| Straight running stability during high speed running (scores) | 100 | 103 | 111 | 105 | 125 | 115 | 120 | 122 | 122 |
| Cornering performance (scores) | 100 | 103 | 106 | 107 | 119 | 112 | 114 | 115 | 118 |

**[Table 4]**

| | Ex. 20 | Ex. 21 | Ex. 22 | Ex. 23 | Ex. 24 | Ex. 25 | Ex. 26 |
|---|---|---|---|---|---|---|---|
| Filament occupancy ratio Fs | 0.19 | 0.50 | 0.45 | 0.35 | 0.25 | 0.20 | 0.15 |
| Average number Ea of band cords arranged | 42 | 37 | 37 | 37 | 37 | 37 | 37 |
| Total ΣSf of cross-sectional areas of steel filaments (mm²) | 0.14 | 0.14 | 0.14 | 0.14 | 0.14 | 0.14 | 0.14 |
| Product Ea*ΣSf | 5.99 | 5.18 | 5.18 | 5.18 | 5.18 | 5.18 | 5.18 |
| Tread aspect ratio Ta | 0.60 | 0.60 | 0.60 | 0.60 | 0.60 | 0.60 | 0.60 |
| Product Ta*Fs | 0.11 | 0.30 | 0.27 | 0.21 | 0.15 | 0.12 | 0.09 |
| Straight running stability during high speed running (scores) | 122 | 115 | 119 | 123 | 122 | 118 | 114 |
| Cornering performance (scores) | 119 | 113 | 115 | 118 | 118 | 115 | 112 |

As a result of the tests, it is confirmed that the tire of each Example has improved cornering performance while maintaining straight running stability during high speed running.

### REFERENCE SIGNS LIST

1. Tire
2. Tread portion
3. Sidewall portion
4. Bead portion
5. Bead core
6. Carcass
8. Band layer
10. Band cord
11. Topping rubber
12. Steel filament
15. Smallest virtual circle
16. Center of a band cord
21. Shoulder region
22. Middle region
23. Crown region
30. Virtual line
Te. Tread end
W. Ground-contact half width
h. Ground-contact heigh
K1. Cord-included sample

## Claims

1. A pneumatic tire (1) comprising a tread portion (2), wherein
the tread portion (2) has a ground-contact surface (2s) in which a center portion in a tire axial direction projects outward in a tire radial direction with respect to each tread end (Te),
a band layer (8) including a band cord (10) helically wound in a tire circumferential direction is included inside the tread portion (2),
the band cord (10) is a steel cord including a plurality of steel filaments (12),
a filament occupancy ratio (Fs) of the band cord (10e) disposed closest to the tread end (Te) in a tire cross-sectional view including a tire rotation axis is represented by a ratio ΣSf/Sv of a total ΣSf (mm²) of cross-sectional areas of the plurality of steel filaments (12) and an area Sv (mm²) of a smallest virtual circle (15) that can completely enclose the plurality of steel filaments (12), and is 0.15 to 0.50, and
a product (Ea*ΣSf) of an average number Ea of the band cords (10) arranged in the band layer (8) per 5 cm in a tire width direction (cords/5 cm) and the total ΣSf of the cross-sectional areas of the plurality of steel filaments (12) is not less than 5;
wherein the tread portion (2) includes a crown region (23) on the tire equator plane (C) side, a shoulder region (21) on the tread end (Te) side, and a middle region (22) between the crown region (23) and the shoulder region (21),
in the tire cross-sectional view, the band layer (8) includes a plurality of band cords (10c, 10m, 10s) disposed in the crown region (23), the middle region (22), and the shoulder region (21), and
the filament occupancy ratio (Fs) of the band cord (10c) disposed in the crown region (23) is larger than the filament occupancy ratio (Fs) of the band cord (10s) disposed in the shoulder region (21).

2. The pneumatic tire (1) according to claim 1, wherein the two to six steel filaments (12) are twisted together in the band cord (10).

3. The pneumatic tire (1) according to claim 1 or 2, wherein four steel filaments (12) are twisted together in the band cord (10).

4. The pneumatic tire (1) according to any one of claims 1 to 3, wherein an outer diameter (D1) of the smallest virtual circle (15) is 0.60 to 0.80 mm in the tread end side region.

5. The pneumatic tire (1) according to any one of claims 1 to 4, wherein the pneumatic tire (1) is for a motorcycle.

6. The pneumatic tire (1) according to any one of claims 1 to 5, wherein the average number Ea of the band cords (10) arranged per 5 cm in the tire width direction is 40 to 80.

7. The pneumatic tire (1) according to any one of claims 1 to 6, wherein, in the tire cross-sectional view, a product (Ta*Fs) of the filament occupancy ratio (Fs) and a tread aspect ratio (Ta) represented by a ratio h/W of a ground-contact height h (mm), which is a height in the tire radial direction from the tread end (Te) to the center portion of the ground-contact surface (2s), to a ground-contact half width W (mm), which is a distance in the tire axial direction from a tire equator plane (C) to the tread end (Te), is not greater than 0.40.

8. The pneumatic tire (1) according to claim 7, wherein an absolute value of a difference between the tread aspect ratio (Ta) and the filament occupancy ratio (Fs) is not greater than 1.0.

9. The pneumatic tire (1) according to any one of claims 1 to 8, wherein the filament occupancy ratio (Fs) is 0.20 to 0.40.

10. The pneumatic tire (1) according to any one of claims 1 to 9, wherein a difference (Ec-Ee) between an average number Ec of the band cords (10) arranged per 5 cm in the tire width direction at the center portion of the ground-contact surface (2s) and an average number Ee of the band cords (10) arranged on the tread end (Te) side is not greater than 10.

11. The pneumatic tire (1) according to any one of claims 1 to 10, wherein the band cord (10) has a bending stiffness of not greater than 35.0 g cm, wherein the bending stiffness corresponds to the average of a bending moment at +15 degrees and a bending moment at -15 degrees when both ends of a band cord (10) having a length of 145 mm are attached to clamps and bending angles of + 15 degrees and -15 degrees are given to the band cord (10).

12. The pneumatic tire (1) according to any one of claims 1 to 11, wherein the band cord (10) has a compressive stiffness (CS) of not greater than 100 N/mm, wherein the compressive stiffness (CS) is measured such that a cord-included sample K1 in which one band cord (10) having a length of 25 mm is embedded at the center of a cylindrical rubber (g) having a diameter of 25 mm and a height of 25 mm in the height direction, and a correction cord-free sample K2 having no band cord (10) embedded therein are prepared; each sample K1, K2 is vulcanized under the same vulcanization conditions, and has substantially the same physical properties except for the presence or absence of the band cord 10.

13. The pneumatic tire (1) according to any one of claims 1 to 12, wherein each of the steel filaments (12) has an outer diameter (d1) of 0.15 to 0.27 mm.

14. The pneumatic tire (1) according to any one of claims 1 to 13, wherein each of the steel filaments (12) has an outer diameter (d1) of 0.18 to 0.24 mm.

## Patentansprüche

1. Luftreifen (1) mit einem Laufflächenabschnitt (2), wobei
der Laufflächenabschnitt (2) eine Bodenkontaktfläche (2s) aufweist, in der ein Mittelabschnitt in einer Reifenaxialrichtung in einer Reifenradialrichtung in Bezug auf jedes Laufflächenende (Te) nach außen vorsteht,
eine Bandschicht (8), die einen Bandkord (10) enthält, der in einer Reifenumfangsrichtung spiralförmig gewickelt ist, innerhalb des Laufflächenabschnitts (2) enthalten ist,
der Bandkord (10) ein Stahlkord ist, der eine Vielzahl von Stahlfilamenten (12) enthält,
ein Filamentbelegungsverhältnis (Fs) des Bandkords (10e), der in einer Reifenquerschnittsansicht, die eine Reifendrehachse enthält, am nächsten zu dem Laufflächenende (Te) angeordnet ist, durch ein Verhältnis ΣSf/Sv einer Gesamt-ΣSf (mm²) von Querschnittsflächen der Vielzahl von Stahlfilamenten (12) und einer Fläche Sv (mm²) eines kleinsten virtuellen Kreises (15), der die Vielzahl von Stahlfilamenten (12) vollständig umschließen kann, dargestellt ist und 0,15 bis 0,50 beträgt, und
ein Produkt (Ea*ΣSf) einer durchschnittlichen Anzahl Ea der in der Bandschicht (8) angeordneten Bandkorde (10) pro 5 cm in einer Reifenbreitenrichtung (Korde/5 cm) und der Gesamt-ΣSf der Querschnittsflächen der Vielzahl von Stahlfilamenten (12) nicht weniger als 5 beträgt,
wobei der Laufflächenabschnitt (2) einen Kronenbereich (23) auf der Seite der Reifenäquatorebene (C), einen Schulterbereich (21) auf der Seite des Laufflächenendes (Te) und einen Mittelbereich (22) zwischen dem Kronenbereich (23) und dem Schulterbereich (21) enthält,
in der Reifenquerschnittsansicht die Bandschicht (8) eine Vielzahl von Bandkorden (10c, 10m, 10s) enthält, die in dem Kronenbereich (23), dem Mittelbereich (22) und dem Schulterbereich (21) angeordnet sind, und
das Filamentbelegungsverhältnis (Fs) des in dem Kronenbereich (23) angeordneten Bandkords (10c) größer als das Filamentbelegungsverhältnis (Fs) des in dem Schulterbereich (21) angeordneten Bandkords (10s) ist.

2. Luftreifen (1) nach Anspruch 1, wobei die zwei bis sechs Stahlfilamente (12) in dem Bandkord (10) miteinander verdreht sind.

3. Luftreifen (1) nach Anspruch 1 oder 2, wobei vier Stahlfilamente (12) in dem Bandkord (10) miteinander verdreht sind.

4. Luftreifen (1) nach einem der Ansprüche 1 bis 3, wobei ein Außendurchmesser (D1) des kleinsten virtuellen Kreises (15) in dem Bereich auf der Seite des Laufflächenendes 0,60 bis 0,80 mm beträgt.

5. Luftreifen (1) nach einem der Ansprüche 1 bis 4, wobei der Luftreifen (1) für ein Motorrad ist.

6. Luftreifen (1) nach einem der Ansprüche 1 bis 5, wobei die durchschnittliche Anzahl Ea der in der Reifenbreitenrichtung pro 5 cm angeordneten Bandkorde (10) 40 bis 80 beträgt.

7. Luftreifen (1) nach einem der Ansprüche 1 bis 6, wobei in der Reifenquerschnittsansicht ein Produkt (Ta*Fs) des Filamentbelegungsverhältnisses (Fs) und eines Laufflächenseitenverhältnisses (Ta), das durch ein Verhältnis h/W einer Bodenkontakthöhe h (mm), die eine Höhe in der Reifenradialrichtung von dem Laufflächenende (Te) zu dem Mittelabschnitt der Bodenkontaktfläche (2s) ist, zu einer Bodenkontakthalbbreite W (mm), die ein Abstand in der Reifenaxialrichtung von einer Reifenäquatorebene (C) zu dem Laufflächenende (Te) ist, dargestellt ist, nicht größer als 0,40 ist.

8. Luftreifen (1) nach Anspruch 7, wobei ein Absolutwert einer Differenz zwischen dem Laufflächenseitenverhältnis (Ta) und dem Filamentbelegungsverhältnis (Fs) nicht größer als 1,0 ist.

9. Luftreifen (1) nach einem der Ansprüche 1 bis 8, wobei das Filamentbelegungsverhältnis (Fs) 0,20 bis 0,40 beträgt.

10. Luftreifen (1) nach einem der Ansprüche 1 bis 9, wobei eine Differenz (Ec-Ee) zwischen einer durchschnittlichen Anzahl Ec der in der Reifenbreitenrichtung pro 5 cm an dem Mittelabschnitt der Bodenkontaktfläche (2s) angeordneten Bandkorde (10) und einer durchschnittlichen Anzahl Ee der auf der Seite des Laufflächenendes (Te) angeordneten Bandkorde (10) nicht größer als 10 ist.

11. Luftreifen (1) nach einem der Ansprüche 1 bis 10, wobei der Bandkord (10) eine Biegesteifigkeit von nicht mehr als 35,0 g·cm aufweist, wobei die Biegesteifigkeit dem Durchschnitt eines Biegemoments bei +15 Grad und eines Biegemoments bei -15 Grad entspricht, wenn beide Enden eines Bandkordes 10 mit einer Länge von 145 mm an Klemmen befestigt sind und dem Bandkord 10 Biegewinkel von +15 Grad und -15 Grad gegeben sind.

12. Luftreifen (1) nach einem der Ansprüche 1 bis 11, wobei der Bandkord (10) eine Drucksteifigkeit (CS) von nicht mehr als 100 N/mm aufweist, wobei die Drucksteifigkeit (CS) so gemessen wird, dass eine kordhaltige Probe K1, in der ein Bandkord (10) mit einer Länge von 25 mm in der Mitte eines zylindrischen Gummis (g) mit einem Durchmesser von 25 mm und einer Höhe von 25 mm in der Höhenrichtung eingebettet ist, und eine kordfreie Korrekturprobe K2 (nicht gezeigt), in der kein Bandkord (10) eingebettet ist, hergestellt werden; wobei jede Probe K1, K2 unter den gleichen Vulkanisationsbedingungen vulkanisiert wird und im Wesentlichen die gleichen physikalischen Eigenschaften mit Ausnahme des Vorhandenseins oder Nichtvorhandenseins des Bandkordes (10) hat.

13. Luftreifen (1) nach einem der Ansprüche 1 bis 12, wobei jedes der Stahlfilamente (12) einen Außendurchmesser (d1) von 0,15 bis 0,27 mm aufweist.

14. Luftreifen (1) nach einem der Ansprüche 1 bis 13, wobei jedes der Stahlfilamente (12) einen Außendurchmesser (d1) von 0,18 bis 0,24 mm aufweist.

## Revendications

1. Bandage pneumatique (1) comprend une portion formant bande de roulement (2), dans lequel
la portion formant bande de roulement (2) a une surface de contact au sol (2s) dans laquelle une portion centrale dans une direction axiale du pneumatique se projette vers l'extérieur dans une direction radiale du pneumatique par rapport à chaque extrémité de bande de roulement (Te),
une couche de bande (8) incluant un câblé de bande (10) enroulé de manière hélicoïdale dans une direction circonférentielle du pneumatique est incluse à l'intérieur de la portion formant bande de roulement (2),
le câblé de bande (10) est un câblé en acier incluant une pluralité de filaments en acier (12),
un rapport d'occupation de filaments (Fs) du câblé de bande (10e) disposé le plus près de l'extrémité de bande de roulement (Te) dans une vue en section transversale du pneumatique incluant un axe de rotation du pneumatique est représenté par un rapport ΣSf/Sv d'un total ΣSf (mm²) d'aires de section transversale de la pluralité de filaments en acier (12) et d'une aire Sv (mm²) d'un cercle virtuel le plus petit (15) qui peut entourer complètement la pluralité de filaments en acier (12), et est de 0,15 à 0,50, et un produit (Σa*ΣSf) d'un nombre moyen Ea des câblés de bande (10) agencés dans la couche de bande (8) par 5 cm dans une direction de la largeur du pneumatique (câblés/5 cm) et du total ΣSf des aires de section transversale de la pluralité de filaments en acier (12) n'est pas inférieur à 5 ;
dans lequel la portion formant bande de roulement (2) inclut une région de couronne (23) sur le côté du plan d'équateur du pneumatique (C), une région d'épaulement (21) sur le côté de l'extrémité de bande de roulement (Te), et une région médiane (22) entre la région de couronne (23) et la région d'épaulement (21),
dans la vue en section transversale du pneumatique, la couche de bande (8) inclut une pluralité de câblés de bande (10c, 10m, 10s) disposés dans la région de couronne (23), la région médiane (22), et la région d'épaulement (21), et
le rapport d'occupation de filaments (Fs) du câblé de bande (10c) disposé dans la région de couronne (23) est supérieur au rapport d'occupation de filaments (Fs) du câblé de bande (10s) disposé dans la région d'épaulement (21).

2. Bandage pneumatique (1) selon la revendication 1, dans lequel les deux à six filaments en acier (12) sont torsadés conjointement dans le câblé de bande (10).

3. Bandage pneumatique (1) selon la revendication 1 ou 2, dans lequel quatre filaments en acier (12) sont torsadés conjointement dans le câblé de bande (10).

4. Bandage pneumatique (1) selon l'une quelconque des revendications 1 à 3, dans lequel un diamètre extérieur (D1) du plus petit cercle virtuel (15) est de 0,60 à 0,80 mm dans la région du côté d'extrémité de bande de roulement.

5. Bandage pneumatique (1) selon l'une quelconque des revendications 1 à 4, dans lequel le bandage pneumatique (1) est pour une motocyclette.

6. Bandage pneumatique (1) selon l'une quelconque des revendications 1 à 5, dans lequel le nombre moyen Ea des câblés de bande (10) agencés par 5 cm dans la direction de la largeur du pneumatique est de 40 à 80.

7. Bandage pneumatique (1) selon l'une quelconque des revendications 1 à 6, dans lequel, dans la vue en section transversale du pneumatique, un produit (Ta*Fs) du rapport d'occupation de filaments (Fs) et d'un rapport d'aspect de bande de roulement (Ta), représenté par rapport h/W d'une hauteur de contact au sol h (mm), qui est une hauteur dans la direction radiale du pneumatique depuis l'extrémité de bande de roulement (Te) jusqu'à la position centrale de la surface de contact au sol (2s), sur une demi-largeur de contact au sol W (mm), qui est une distance dans la direction axiale du pneumatique depuis un plan d'équateur de pneumatique (C) jusqu'à l'extrémité de bande de roulement (Te), n'est pas supérieur à 0,40.

8. Bandage pneumatique (1) selon la revendication 7, dans lequel une valeur absolue d'une différence entre le rapport d'aspect de bande de roulement (Ta) et le rapport d'occupation de filaments (Fs) n'est pas supérieure à 1,0.

9. Bandage pneumatique (1) selon l'une quelconque des revendications 1 à 8, dans lequel le rapport d'occupation de filaments (Fs) est de 0,20 à 0,40.

10. Bandage pneumatique (1) selon l'une quelconque des revendications 1 à 9, dans lequel une différence (Ec-Ee) entre un nombre moyen Ec des câblés de bande (10) agencés par 5 cm dans la direction de la largeur du pneumatique au niveau de la portion centrale de la surface de contact au sol (2s) et un nombre moyen Ee des câblés de bande (10) agencés sur le côté d'extrémité de bande de roulement (Te) n'est pas supérieure à 10.

11. Bandage pneumatique (1) selon l'une quelconque des revendications 1 à 10, dans lequel le câblé de bande (10) a une rigidité de flexion qui n'est pas supérieure à 35,0 g cm, la rigidité de flexion correspondant à la moyenne d'un moment de flexion à +15 degrés et d'un moment de flexion à -15 degrés quand les deux extrémités d'un câblé de bande (10) ayant une longueur de 145 mm sont attachées à des pinces et des angles de flexion de +15 degrés et -15 degrés sont donnés au câblé de bande (10).

12. Bandage pneumatique (1) selon l'une quelconque des revendications 1 à 11, dans lequel le câblé de bande (10) a une rigidité de compression (CS) qui n'est pas supérieure à 100 N/mm, la rigidité de compression (CS) étant mesurée de telle sorte qu'un échantillon K1 avec câblé, dans lequel un câblé de bande (10) ayant une longueur de 25 mm est intégré au centre d'un caoutchouc cylindrique (g) ayant un diamètre de 25 mm et une hauteur de 25 mm dans la direction de la hauteur, et un échantillon K2 sans câblé de correction n'ayant pas de câblé de bande (10) intégré à l'intérieur, sont préparés ; chaque échantillon K1, K2 étant vulcanisé sous les mêmes conditions de vulcanisation, et ayant sensiblement les mêmes propriétés physiques, sauf concernant la présence ou l'absence du câblé de bande (10).

13. Bandage pneumatique (1) selon l'une quelconque des revendications 1 à 12, dans lequel chacun des filaments en acier (12) a un diamètre extérieur (d1) de 0,15 à 0,27 mm.

14. Bandage pneumatique (1) selon l'une quelconque des revendications 1 à 13, dans lequel chacun des filaments en acier (12) a un diamètre extérieur (d1) de 0,18 à 0,24 mm.
